# EUROPEAN PATENT SPECIFICATION

(11) **EP 2 644 352 B1**
(45) Date of publication and mention of the grant of the patent: **09.01.2019**
(21) Application number: 13156947.7
(22) Date of filing: 27.02.2013
(51) Int. Cl.: B29C 45/48, B29C 45/76, B29C 45/18

(54) **INJECTION MOLDING MACHINE WITH TWO CYLINDERS**
SPRITZGIESSMASCHINE MIT ZWEI ZYLINDERN
MACHINE DE MOULAGE À INJECTION AVEC DEUX CYLINDRES

(30) Priority: 28.03.2012 JP 2012074435
(43) Date of publication of application: 02.10.2013
(73) Proprietor: SUMITOMO HEAVY INDUSTRIES, LTD., Tokyo 141-6025 (JP)
(72) Inventor: Sato, Yuji, Kanagawa, 237-8555 (JP)
(74) Representative: Hoffmann Eitle

(56) References cited:
- DE-C2- 4 447 703
- GB-A- 2 269 149
- JP-A- H05 318 531
- JP-A- S62 132 624
- JP-A- 2004 351 661
- US-A- 4 511 319
- US-A1- 2011 215 496

## Description

### BACKGROUND OF THE INVENTION

### 1. Field of the Invention

The present invention relates to an injection molding machine that uses two cylinders to transport (meter) a molding material.

### 2. Description of the Related Art

Conventional injection molding machines of the above type are known. (See, e.g., Patent Document 1) [Patent Document 1] Japanese Laid-Open Patent Publication No. 2009-90614

It is noted that in the injection molding machine of the above type, two screws (drive members) arranged within the two cylinders operate in sync to transport (meter) the molding material. However, setting up the operational speed of the drive members to a suitable speed requires trial and error so that initial setting operations may be quite burdensome for the user of the injection molding machine.

A further document is US 4,511,319 A1 referring to a vent-type injection molding machine. A revolution speed of a speed screw is selected and determined according to a thickness transmitted from a sequence controller at the injection stroke or the plastification measurement stroke. The revolution speed of the feed screw is controlled in the injection stroke as well according to the moving speed of the screw 1 in order to supply the material at a desirable amount.

US 2011/0215496 A1 refers to an injection molding method including a measuring step for measuring an amount of molding material by storing a molding material fed into a cylinder of an injection molding apparatus in a tip of a cylinder by rotation of a screw and stopping a rotation of the screw after the screw is retracted to a measurement set position by a pressure from stored molding material.

DE 44 47 703 C2 mentions a material supply device having a motor for a screw.

GB 2 269 149 A refers to a screw feed mechanism for conveying flowable material in a molding machine.

Further documents are JP 2004-351661 A, JP H05 318531 A and JP S62 132624 A.

### SUMMARY OF THE INVENTION

It is a general object of at least one embodiment of the present invention to provide an injection molding machine that substantially obviates one or more problems caused by the limitations and disadvantages of the related art. One particular object of at least one embodiment of the present invention is to reduce the burden of a user during initial setting operations of the injection molding machine.

In one embodiment of the present invention, an injection molding machine includes the features of claim 1.

According to an aspect of the present invention, the burden on a user may be reduced during initial setting operations of the injection molding machine.

### BRIEF DESCRIPTION OF THE DRAWINGS

Other objects, features and advantages of the present invention will become more apparent from the following detailed description when read in conjunction with the accompanying drawings, in which:
FIG. 1 is a cross-sectional view of an exemplary injection device that may be used in an injection molding machine according to an embodiment of the present invention;
FIG. 2 is a block diagram showing an exemplary configuration of an information output apparatus that may be used in the injection molding machined;
FIG. 3 is a flowchart showing exemplary process steps for configuring a database according to a first embodiment of the present invention;
FIG. 4 is a flowchart showing exemplary process steps for outputting a recommended value for a rate of synchronization according to the first embodiment;
FIG. 5 is a flowchart showing exemplary process steps for configuring the database according to a second embodiment of the present invention; and
FIG. 6 is a flowchart showing exemplary process steps for outputting the recommended value for the rate of synchronization according to the second embodiment.

### DETAILED DESCRIPTION OF THE PREFERRED EMBODIMENT

In the following, embodiments of the present invention are described with reference to the accompanying drawings.

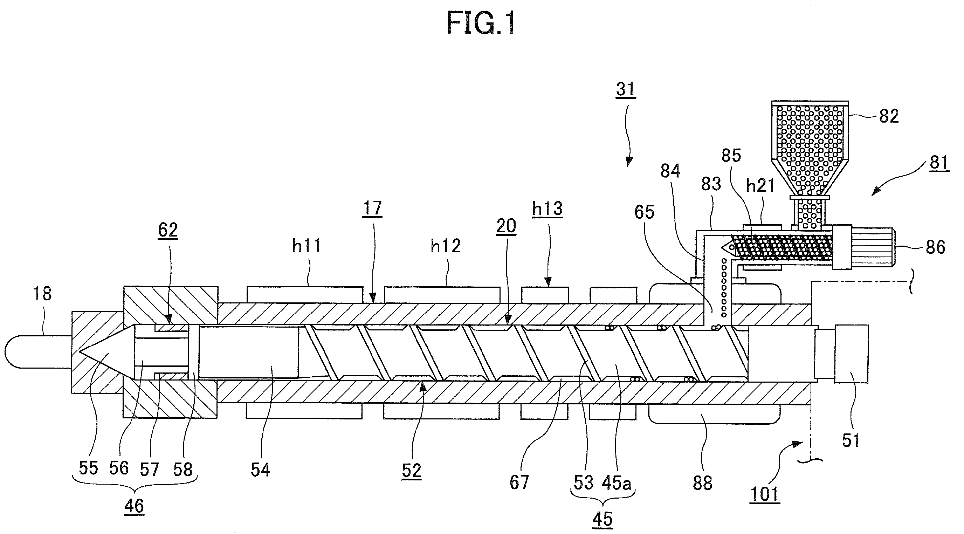

FIG. 1 is a cross-sectional view of an exemplary injection device 31 that may be used in an injection molding machine according to an embodiment of the present invention. The injection molding machine according to the present embodiment includes a mold device (not shown), a clamping device (not shown), and the injection device 31. The mold device includes a first mold corresponding to a stationary mold and a second mold corresponding to a movable mold. The clamping device includes a stationary platen to which the stationary mold is attached, a movable platen to which the movable mold is attached, and a clamping cylinder that moves the movable platen forward and backward to close, clamp, and open the mold device. It is noted that the clamping device may be an electromagnetic clamping device or a clamping device using a toggle mechanism, for example.

The injection device includes a heating cylinder 17, an injection nozzle 18 that is arranged at the front end of the heating cylinder 17, a main screw 20 that is arranged inside the heating cylinder 17 in a manner such that the main screw 20 may rotate and move back and forth within the heating cylinder 17, heaters h11-h13 that are arranged at the outer periphery of the heating cylinder 17, and a drive unit 101 that is arranged at the rear end portion of the heating cylinder 17. The drive unit 101 includes an injection motor and a metering motor, for example.

The main screw 20 includes a screw body 52, an injection part 46 that is arranged at the front end portion of the screw body 52, and an shaft part 51 that is arranged at the rear end portion of the screw body 52 and is connected to the drive unit 101. The screw body 52 includes a flight part 45 and a pressure member 54 that is detachably arranged at the front end portion of the flight part 45. The flight part 45 includes a rod-shaped body 45a and a spiral flight 53 protruding from the outer periphery of the body 45a. The flight 53 forms a spiral groove 67 around the outer periphery of the body 45a. It is noted that in an alternative embodiment, the pressure member 54 may be omitted and the flight part 45 may extend substantially the entire length of the screw body 52.

The injection part 46 includes a head part (screw head) 55 having a tip portion that is conically-shaped, a rod part 56 arranged adjacent to the head part 55 at the rear end portion of the head part 55, a check ring 57 arranged around the rod part 56, and a seal ring 58 that is attached to the front end portion of the pressure member 54.

During a metering process, when the main screw 20 is moved backward and the check ring 57 is moved forward with respect to the rod part 56 so that the check ring 57 is separated from the seal ring 58, a seal realized by a backflow prevention device 62 is released. During an injection process, when the main screw 20 is moved forward and the check ring 57 is moved backward with respect to the rod part 56 so that the check ring 57 comes into contact with the seal ring 58, the seal is realized by the backflow prevention device 62.

A resin supply port 65 as a molding material supply port is arranged near the rear end of the heating cylinder 17. The resin supply port 65 is arranged to oppose a rear portion of the groove 67 when the main screw 20 is positioned at a maximum forward position within the heating cylinder 17. A loading unit 81 for loading resin is attached to the resin supply port 65. A hopper 82 for accommodating pelletized resin is arranged at an upper portion of the loading unit 81. The resin accommodated in the hopper 82 is transferred to the resin supply port 65 via the loading unit 81 and is supplied to the heating cylinder 17 from the resin supply port 65.

The loading unit 81 includes a cylinder part 83 that is arranged to extend horizontally, a guide part 84 that is arrange to extend downward from the front portion of the cylinder part 83, a feed screw 85 that is arranged to be rotatable within the cylinder part 83, a feed motor 86 that rotates the feed screw 85, and a heater h21 that is arranged at the outer periphery of the cylinder part 83, for example. The rear portion of the cylinder part 83 is connected to the hopper 82 and the front portion of the cylinder part 83 is connected to the guide part 84.

When the feed motor 86 is driven to rotate the feed screw 85, the resin within the hopper 82 is supplied to the interior of the cylinder part 83 and is moved forward along a groove formed on the outer periphery of the feed screw 85. During this time, the resin is heated by the heater h21 to be preheated. The resin is then transferred from the front portion of the feed screw 85 to the guide part 84 and is dropped through the guide part 84 to be supplied to the heating cylinder 17.

During the metering process, when the feed motor 86 is driven in the forward direction and the metering motor (not shown) of the drive unit 101 is driven in the forward direction, the feed screw 85 and the main screw 20 are rotated in the forward direction. During such operations, the resin within the hopper 82 is supplied to the cylinder part 83, is moved forward along the groove formed on the outer periphery of the feed screw 85 while being preheated by the heater h21, is transferred to the guide part 84 from the front portion of the feed screw 85, is dropped through the guide part 84, and is supplied to the heating cylinder 17. It is noted that the resin within the cylinder part 83 is preheated to a predetermined temperature that would not cause melting of the resin. For example, the resin within the cylinder part 83 may be preheated to a temperature below the glass-transition temperature.

The resin supplied to the heating cylinder 17 is moved forward along the groove 67 and is heated to be melted by the heaters h11-h13. It is noted that the pressure of the resin within the heating cylinder 17 gradually increases as the resin is moved toward the front end portion of the screw body 52 from a pressure increase starting point at a predetermined distance away from the pressure member 54.

Then, the resin passes through the resin flow path between the heating cylinder 17 and the pressure member 54 during which time the pressure of the resin is increased further so that the resin may be adequately kneaded. Then, the resin passes through the resin flow path between the heating cylinder 17 and the rod part 56 and is moved forward to the front portion of the screw head 55. Also, in order to add back pressure to the main screw 20 during the metering process, the injection motor (not shown) of the drive unit 101 is driven to prevent the main screw 20 from moving backward.

During the injection process, the main screw 20 is moved forward while being prevented from rotating by the drive unit 101. When the main screw 20 is moved forward, the resin transported to the front portion of the screw head 55 is injected from the injection nozzle 18 and filled into a cavity of the mold device.

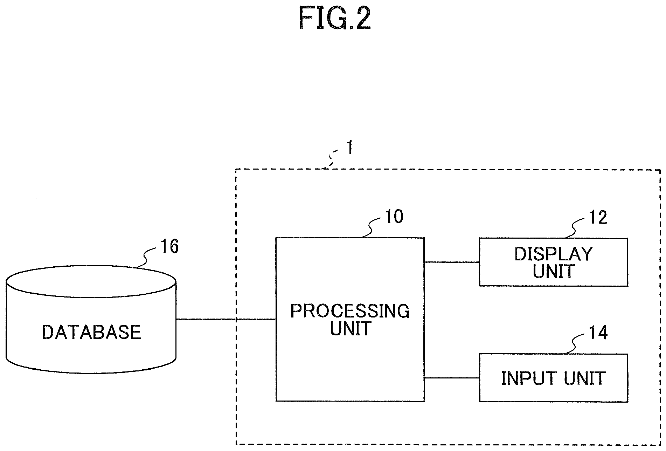

FIG. 2 is a block diagram showing an exemplary configuration of an information output apparatus 1 that may be used in the injection molding machine according to the present embodiment.

As is shown in FIG. 2, the information output apparatus 1 includes a processing unit 10 and a display unit 12. The information output apparatus 1 may optionally include an input unit 14 as well. The information output apparatus 1 is connected to a database 16. It is noted that in certain embodiments, the database 16 may be installed within the information output apparatus 1.

The processing unit 10 may be realized by hardware, software, firmware, or a combination of at least two of the above. For example, the processing unit 10 may include a CPU (central processing unit) that realizes one or more of the functions described below.

The display unit 12 may be any type of display such as a liquid crystal display (LCD). The display unit 12 may provide a control screen for controlling the injection molding machine, for example. The display unit 12 is controlled by the processing unit 10 to display information such as a recommended value for the rate of synchronization between the feed screw 85 and the main screw 20. It is noted that a method of displaying such information is described below.

The input unit 14 may be a user interface for the user of the injection molding machine. The input unit 14 may be any type of user interface such as a keyboard or a mouse. In one example, the display unit 12 may be a touch panel display and the input unit 14 may be a touch switch that is displayed on the touch panel display.

The database 16 may be any type of storage device such as a HDD (hard disk drive). The database 16 may be connected to the information output apparatus 1 via a cable or a wireless connection. In one example, the database 16 may be a removable storage medium, and in such case, the storage medium may be inserted into a predetermined slot of the information output apparatus 1 upon use. In another example, the database 16 may be an external server. In such case, the information output apparatus 1 may access the database 16 via a network. In yet another example, the database 16 may be a predetermined memory installed within the information output apparatus 1. The predetermined memory may be a memory that cannot be rewritten such as a ROM (read-only memory) or a rewritable memory such as an EEPROM (electrically erasable programmable read-only memory). In the latter case, information stored in the database 16 may be updated periodically or on random occasions, for example. The database 16 stores information such as the recommended value for the rate of synchronization between the feed screw 85 and the main screw 20.

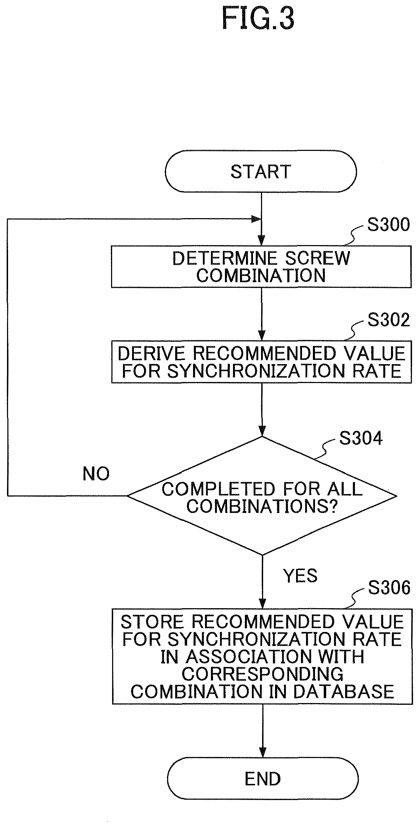

FIG. 3 is a flowchart showing exemplary process steps for configuring the database 16 according to a first embodiment. It is noted that the process of FIG. 3 may be performed by the manufacturer of the injection molding machine, for example.

In step S300, a combination of the feed screw 85 and the main screw 20 that may be used in the injection molding machine is determined. The feed screw 85 may be selected from a number of different feed screws having different diameters, for example. Similarly, the main screw 20 may be selected from a number of different main screws having different diameters, for example.

In step S302, a recommended value for the rate of synchronization is derived for the combination of the feed screw 85 and the main screw 20 determined in step S300. It is noted that the rate of synchronization refers to the ratio of the rotation speed of the feed screw 85 to the rotation speed of the main screw 20; i.e., (feed screw 85 rotation speed)/(main screw 20 rotation speed). The recommended value for the rate of synchronization may be derived in any manner such as trial and error. For example, the recommended value may be derived by actually operating the injection molding machine while changing the rate of synchronization to compare and verify various types of data. It is noted that the recommended value is based on unique standards developed by each individual manufacture so that even when the same combination of the feed screw 85 and the main screw 20 is used, the corresponding recommended value for the rate of synchronization may vary depending on the manufacturer.

In step S304, a determination is made as to whether a recommended value for the rate of synchronization has been derived for every conceivable combination of the feed screw 85 and the main screw 20. If a recommended value for the rate of synchronization has not yet been derived for a given combination of the feed screw 85 and the main screw 20, the process goes back to step S300, and a recommended value for the rate of synchronization is derived for the given combination of the feed screw 85 and the main screw 20 in step S302. In this way, recommended values for the rate of synchronization are derived for all conceivable combinations of the feed screw 85 and the main screw 20. It is noted that some types of injection molding machines may only accommodate a specific combination of the feed screw 85 and the main screw 20 while other types of injection molding machines may accommodate plural different combinations of the feed screw 85 and the main screw 20. The present embodiment may be implemented in any type of injection molding machine so that a recommended value for the rate of synchronization may be derived for each conceivable combination of the feed screw 85 and the main screw 20. However, it is noted that in a case where there is only one conceivable combination of the feed screw 85 and the main screw 20, step S304 may be omitted.

In step S306, the recommended values for the rate of synchronization for the combinations of the feed screw 85 and the main screw 20 are stored in the database 16. It is noted that the recommended values are stored in association with the corresponding combination of the feed screw 85 and the main screw 20.

In this way, a recommended value for the rate of synchronization for each combination of the feed screw 85 and the main screw 20 is stored in the database 16. It is noted that the process steps shown in FIG. 3 may be performed when a new combination of the feed screw 85 and the main screw 20 becomes available, for example. In such case, a recommended value for the rate of synchronization for the new combination of the feed screw 85 and the main screw 20 may be additionally stored in the database 16.

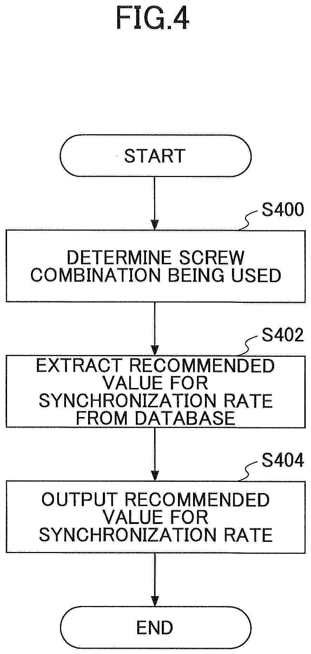

FIG. 4 is a flowchart showing exemplary process steps for outputting a recommended value for the rate of synchronization according to the first embodiment. It is noted that the process steps shown in FIG. 4 is performed by the information outputting apparatus 1. The process steps of FIG. 4 may be performed at a time an output of a recommended value for the rate of synchronization is needed. For example, the process steps of FIG. 4 may be performed upon starting operations for initially setting up (or adjusting) the rotation speeds of the feed screw 85 and the main screw 20 (e.g., when a corresponding command is input by the user via the input unit 14).

In step S400, the combination of the feed screw 85 and the main screw 20 that is used in the injection molding machine including the information output apparatus 1 is determined. The combination of the feed screw 85 and the main screw 20 may be determined based on data input by the user or data that is preregistered by the manufacturer, for example.

In step S402, the corresponding recommended value for the rate of synchronization for the combination of the feed screw 85 and the main screw 20 determined in step S400 is extracted from the database 16. As is described above, the database 16 may be an external database, an external memory, or a memory installed in the information output apparatus 1. In a case where the database 16 is a memory installed in the information output apparatus 1 and there is only one combination of the feed screw 85 and the main screw 20 that may be used in the injection molding machine including the information output apparatus 1, the database 16 may store the recommended value for the rate of synchronization for this one combination. In this case, the processing unit 10 may obtain the recommended value by simply reading the recommended value for the rate of synchronization stored in the database 16.

In step S404, the recommended value for the rate of synchronization extracted in step S402 is output to the display unit 12. It is noted that the recommended value for the rate of synchronization may be output in any manner. For example, the recommended value may be displayed in the following manner: "Recommended Value for Synchronized rate = α". Although a definition or explanation of the rate of synchronization may be included in a user manual, in some embodiments, an explanation (definition) of the rate of synchronization may also be displayed. In other embodiments, the recommended value for the rate of synchronization may be output as sound in addition to or in place of outputting a display of the recommended value.

By performing the process steps of FIG. 4, the user may be informed of the recommended value for the rate of synchronization for the combination of the feed screw 85 and the main screw 20 used in the injection molding machine. Accordingly, the user may adjust the rotation speed of the feed screw 85 and the rotation speed of the main screw 20 based on the recommended value for the rate of synchronization. In this way, the user of the injection molding machine may perform initial setting operations and other operations for setting up or adjusting the rotation speeds of the feed screw 85 and the main screw 20 more efficiently, for example.

It is noted that in the process shown in FIG. 4, the recommended value for the rate of synchronization is output. However, in other embodiments, a recommended range (recommended variable range) for the rate of synchronization may be output in addition to the recommended value for the rate of synchronization. In this case, the recommended variable range for the rate of synchronization may be derived beforehand at the manufacturer side in a manner similar to deriving the recommended value for the rate of synchronization (see FIG. 3) and the derived range may be stored in the database 16. The recommended variable range may be represented by an upper limit and a lower limit of the rate of synchronization, for example. Also, the recommended variable range for the rate of synchronization may be displayed in combination with the recommended value for the rate of synchronization. For example, the recommended value for the rate of synchronization may be indicated within a display of the recommended variable range for the rate of synchronization.

Also, in performing step S402 of FIG. 4, when a recommended value for the rate of synchronization corresponding to the combination of the feed screw 85 and the main screw 20 determined in step S400 is not stored in the database 16, the corresponding recommended value for the rate of synchronization for this combination may be calculated and derived based on a recommended value for the rate of synchronization for another combination (a recommended value for the rate of synchronization that is stored in the database 16). In such case, a predetermined conversion formula (or interpolation formula) based on the correlation between the screw diameters may be used, for example.

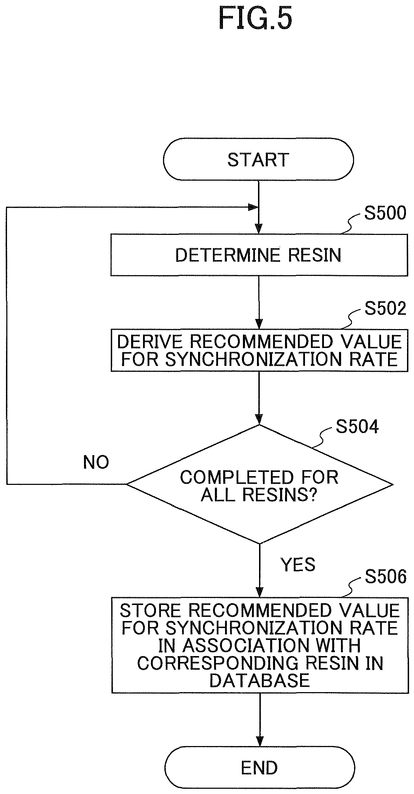

FIG. 5 is a flowchart showing exemplary process steps for configuring the database 16 according to a second embodiment of the present invention. It is noted that the process steps of FIG. 5 may be performed by the manufacturer of the injection molding machine, for example.

In step S500, the resin (molding material) that may be used in the injection molding machine is determined.

In step S502, a recommended value for the rate of synchronization is derived for the resin determined in step S500. It is noted that the recommended value is derived based on unique standards developed by each individual manufacturer so that the recommended value for the same resin may vary depending on the manufacturer.

In step S504, a determination is made as to whether a recommended value for the rate of synchronization has been derived for each resin that may be used in the injection molding machine. If a recommended value for the rate of synchronization has not yet been derived for a given resin that may be used in the injection molding machine, the process goes back to step S500, and a recommended value for the rate of synchronization is derived for the given resin in step S502. In this way, recommended values for the rate of synchronization are derived for all resins that may be used in the injection molding machine. It is noted that the resins for which the recommended values for the synchronized rate are derived may be resins of different types, for example. Also, the resins for which the recommended values are derived may be resins with or without some other material (e.g., fiberglass) mixed thereto or resins having a material mixed thereto at different ratios, for example. Also, the resins for which the recommended values are derived may be distinguished based on whether they are new or recycled, whether they have recycled material mixed thereto, or the ratio at which the recycled material is mixed thereto, for example.

In step S506, the recommended values for the different resins are stored in the database 16. It is noted that the recommended values may be stored in association with their corresponding resin.

In this way, recommended values for the rate of synchronization for different resins that may be used in the injection molding machine may be stored in the database 16. It is noted that the process steps shown in FIG. 5 may be performed when a new resin becomes available for use in the injection molding machine, for example. In such case, a recommended value for the rate of synchronization for the new resin may be additionally stored in the database 16.

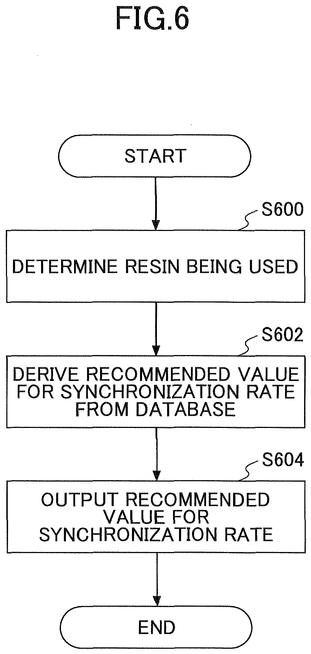

FIG. 6 is a flowchart showing exemplary process steps for outputting the recommended value for the rate of synchronization according to the second embodiment. It is noted that the process steps of FIG. 6 is performed by the information output apparatus 1. The process steps of FIG. 6 may be performed at a time an output of a recommended value for the rate of synchronization is needed. For example, the process steps of FIG. 6 may be performed upon starting operations for initially setting up (or adjusting) the rotation speeds of the feed screw 85 and the main screw 20 (e.g., when a corresponding command is input by the user via the input unit 14).

In step S600, the resin that is used in the injection molding machine including the information output apparatus 1 is determined. The resin used in the injection molding machine may be determined based on some form of resin input information. For example, the resin used in the injection molding machine may be determined based on data input by the user (corresponding to one example of resin input information) or data that is preregistered by the manufacturer (corresponding to another example of resin input information).

In step S602, the corresponding recommended value for the rate of synchronization for the resin determined in step S600 is extracted from the database 16. As is described above, the database 16 may be an external database, an external memory, or a memory installed in the information output apparatus 1. In a case where the database 16 is a memory installed in the information output apparatus 1 and there is only one resin that may be used in the injection molding machine including the information output apparatus 1, the database 16 may store the recommended value for the rate of synchronization for this resin. In this case, the processing unit 10 may obtain the recommended value by simply reading the recommended value for the rate of synchronization stored in the database 16.

In step S604, the recommended value for the rate of synchronization extracted in step S602 is output to the display unit 12. It is noted that the recommended value for the rate of synchronization may be output in any manner. For example, the recommended value may be displayed in the following manner: "Recommended Value for Synchronized rate = α". Although a definition or explanation of the rate of synchronization may be included in a user manual, in some embodiments, an explanation (definition) of the rate of synchronization may also be displayed. In other embodiments, the recommended value for the rate of synchronization may be output as sound in addition to or in place of outputting a display of the recommended value.

By performing the process steps of FIG. 6, the user may be informed of the recommended value for the rate of synchronization for the resin used in the injection molding machine. For example, when the user selects the resin being used via a setting screen, the recommended value for the rate of synchronization corresponding to the selected resin may be output. Accordingly, the user may adjust the rotation speed of the feed screw 85 and the rotation speed of the main screw 20 based on the output recommended value for the rate of synchronization. In this way, the user of the injection molding machine may perform initial setting operations and other operations for setting up or adjusting the rotation speeds of the feed screw 85 and the main screw 20 more efficiently, for example.

It is noted that in the process shown in FIG. 6, the recommended value for the rate of synchronization is output. However, in other embodiments, a recommended range (recommended variable range) for the rate of synchronization may be output in addition to the recommended value for the rate of synchronization. In this case, the recommended variable range for the rate of synchronization may be derived beforehand at the manufacturer side in a manner similar to deriving the recommended value for the rate of synchronization (see FIG. 5) and the derived range may be stored in association with the corresponding resin in the database 16. The recommended variable range may be represented by an upper limit and a lower limit of the rate of synchronization, for example. Also, the recommended variable range for the rate of synchronization may be displayed in combination with the recommended value for the rate of synchronization. For example, the recommended value for the rate of synchronization may be indicated within a display of the recommended variable range for the rate of synchronization.

In another embodiment, the process steps of FIGS. 5 and 6 according to the second embodiment may be used in combination with the process steps of FIGS. 3 and 4 according to the first embodiment. That is, a recommended value for the rate of synchronization may be stored in the database 16 in association with a corresponding combination of the feed screw 85 and the main screw 20 and a corresponding resin. In such case, the process steps of FIGS. 5 and 6 may be performed with respect to each conceivable combination of the feed screw 85 and the main screw 20, for example. In this way, a recommended value for the rate of synchronization corresponding to the combination of the feed screw 85 and the main screw 20 being used and the resin being used may be output.

It is noted that the "cylinder part 83" described above corresponds to an exemplary embodiment of the "first cylinder" of the present invention, the "heating cylinder 17" described above corresponds to an exemplary embodiment of the "second cylinder" of the present invention, the "feed screw 85" described above corresponds to an exemplary embodiment of the "first drive member" of the present invention, and the "main screw 20" described above corresponds to an exemplary embodiment of the "second drive member" of the present invention.

Further, the present invention is not limited to these embodiments, and numerous variations and modifications may be made without departing from the scope of the present invention.

For example, although a recommended value for the rate of synchronization is output in the embodiments described above, in other embodiments, a recommended value for a substantive equivalent of the above rate of synchronization may be output. A recommended value for the ratio of the rotation speed of the main screw 20 to the rotation speed of the feed screw 85 is output. Alternatively, a recommended value for the ratio of the applied current or applied voltage of the motor driving the main screw 20 to the applied current or applied voltage of the motor driving the feed screw 85, or a recommended value for the ratio of the molding material transporting capacity of the main screw 20 to the molding material supply capacity of the feed screw 85 is output.

## Claims

1. An injection molding machine (31) comprising:
a first cylinder (83);
a second cylinder (17) that is connected to the first cylinder;
a first drive member (85) that is arranged at the first cylinder (83) and is configured to move a molding material within the first cylinder (83) toward the second cylinder (17);
a second drive member (20) that is arranged at the second cylinder (17) and is configured to operate in sync with the first drive member (85) and move the molding material supplied to the second cylinder (17) from the first cylinder (83) by the first drive member (85) in a forward direction;
wherein the first drive member (85) includes a first screw and the second drive member (20) includes a second screw,
and **characterized by**
an information output apparatus (12) that is adapted to output a recommended value for a ratio of a first setting value to a second setting value, the first setting value relating to an operational speed of the first drive member (85) and the second setting value relating to an operational speed of the second drive member (20), wherein the first setting value corresponds to a rotation speed of the first drive member (85) and the second setting value corresponds to a rotation speed of the second drive member (20), or
wherein the recommended value is a ratio of the applied current or applied voltage of a motor driving the second drive member (20) to the applied current or applied voltage of a motor driving the first drive member (85), or
wherein the recommended value is a ratio of a molding material transporting capacity of the second drive member (20) to a molding material supply capacity of the first drive member (85).

2. The injection molding machine (31) as claimed in claim 1, wherein
the information output apparatus (1) is adapted to obtain the recommended value for the ratio from a database (16) storing the recommended value for the ratio and is adapted to output the obtained recommended value for the ratio.

3. The injection molding machine (31) as claimed in claim 1, wherein
the information output apparatus (1) is adapted to output a recommended range for the ratio in addition to the recommended value for the ratio.

4. The injection molding machine (31) as claimed in claim 2, wherein
the database (16) is adapted to store the recommended value for the ratio for at least two different combinations of the first drive member (85) and the second drive member (20).

5. The injection molding machine (31) as claimed in claim 4, wherein
the information output apparatus (12) is adapted to determine the combination of the first drive member (85) and the second drive member (20) used in the injection molding machine, is adapted to obtain the recommended value for the ratio corresponding to the combination of the first drive member (85) and the second drive member (20) from the database (20), and is adapted to output the obtained recommended value for the ratio.

6. The injection molding machine (31) as claimed in claim 1, wherein
the information output apparatus (1) is adapted to output the recommended value for the ratio corresponding to a specified resin based on resin input information indicating the specified resin.

## Patentansprüche

1. Spritzgießmaschine (31), umfassend:
einen ersten Zylinder (83);
einen zweiten Zylinder (17), der mit dem ersten Zylinder verbunden ist;
ein erstes Antriebselement (85), das am ersten Zylinder (83) angeordnet ist und konfiguriert ist, um ein Formmaterial innerhalb des ersten Zylinders (83) in Richtung des zweiten Zylinders (17) zu bewegen;
ein zweites Antriebselement (20), das am zweiten Zylinder (17) angeordnet ist und konfiguriert ist, um synchron mit dem ersten Antriebselement (85) zu arbeiten und das dem zweiten Zylinder (17) zugeführte Formmaterial vom ersten Zylinder (83) durch das erste Antriebselement (85) in eine Vorwärtsrichtung zu bewegen;
wobei das erste Antriebselement (85) eine erste Schraube einschließt und das zweite Antriebselement (20) eine zweite Schraube einschließt,
und **gekennzeichnet durch**
eine Informationsausgabeeinrichtung (12), die angepasst ist, um einen empfohlenen Wert für ein Verhältnis eines ersten Einstellwerts zu einem zweiten Einstellwert auszugeben, wobei sich der erste Einstellwert auf eine Betriebsgeschwindigkeit des ersten Antriebselements (85) bezieht und sich der zweite Einstellwert auf eine Betriebsgeschwindigkeit des zweiten Antriebselements (20) bezieht, wobei der erste Einstellwert einer Drehgeschwindigkeit des ersten Antriebselements (85) entspricht und der zweite Einstellwert einer Drehgeschwindigkeit des zweiten Antriebselements (20) entspricht, oder
wobei der empfohlene Wert ein Verhältnis des angelegten Stroms oder der angelegten Spannung eines Motors, der das zweite Antriebselement (20) antreibt, zu dem angelegten Strom oder der angelegten Spannung eines Motors, der das erste Antriebselement (85) antreibt, ist, oder
wobei der empfohlene Wert ein Verhältnis einer Formmaterialtransportkapazität des zweiten Antriebselements (20) zu einer Formmaterialzufuhrkapazität des ersten Antriebselements (85) ist.

2. Spritzgießmaschine (31) nach Anspruch 1, wobei
die Informationsausgabeeinrichtung (1) angepasst ist, um den empfohlenen Wert für das Verhältnis aus einer Datenbank (16) zu erhalten, die den empfohlenen Wert für das Verhältnis speichert, und angepasst ist, um den erhaltenen empfohlenen Wert für das Verhältnis auszugeben.

3. Spritzgießmaschine (31) nach Anspruch 1, wobei
die Informationsausgabeeinrichtung (1) angepasst ist, um zusätzlich zu dem empfohlenen Wert für das Verhältnis einen empfohlenen Bereich für das Verhältnis auszugeben.

4. Spritzgießmaschine (31) nach Anspruch 2, wobei
die Datenbank (16) angepasst ist, um den empfohlenen Wert für das Verhältnis für mindestens zwei verschiedene Kombinationen des ersten Antriebselements (85) und des zweiten Antriebselements (20) zu speichern.

5. Spritzgießmaschine (31) nach Anspruch 4, wobei
die Informationsausgabeeinrichtung (12) angepasst ist, um die Kombination des ersten Antriebselements (85) und des zweiten Antriebselements (20), das in der Spritzgießmaschine verwendet wird, zu bestimmen, angepasst ist, um den empfohlenen Wert für das Verhältnis zu erhalten, das der Kombination des ersten Antriebselements (85) und des zweiten Antriebselements (20) aus der Datenbank (20) entspricht, und angepasst ist, um den erhaltenen empfohlenen Wert für das Verhältnis auszugeben.

6. Spritzgießmaschine (31) nach Anspruch 1, wobei
die Informationsausgabeeinrichtung (1) angepasst ist, um den empfohlenen Wert für das Verhältnis auszugeben, das einem angegebenen Harz entspricht, basierend auf Harzeingabeinformationen, die das angegebene Harz anzeigen.

## Revendications

1. Machine de moulage à injection (31) comprenant :
un premier cylindre (83) ;
un second cylindre (17) qui est raccordé au premier cylindre ;
un premier élément d'entraînement (85) qui est agencé sur le premier cylindre (83) et est configuré pour déplacer un matériau de moulage dans le premier cylindre (83) vers le second cylindre (17) ;
un second élément d'entraînement (20) qui est agencé sur le second cylindre (17) et est configuré pour fonctionner en synchronisation avec le premier élément d'entraînement (85) et déplacer le matériau de moulage fourni au second cylindre (17) à partir du premier cylindre (83) par le premier élément d'entraînement (85) dans une direction vers l'avant ;
dans lequel le premier élément d'entraînement (85) inclut une première vis et le second élément d'entraînement (20) inclut une seconde vis,
et **caractérisée par**
un appareil de sortie d'information (12) qui est adapté pour sortir une valeur recommandée pour un rapport d'une première valeur de réglage à une seconde valeur de réglage, la première valeur de réglage concernant une vitesse opérationnelle du premier élément d'entraînement (85) et la seconde valeur de réglage concernant une vitesse opérationnelle du second élément d'entraînement (20), dans laquelle la première valeur de réglage correspond à une vitesse de rotation du premier élément d'entraînement (85) et la seconde valeur de réglage correspond à une vitesse de rotation du second élément d'entraînement (20), ou
dans laquelle la valeur recommandée est un rapport du courant appliqué ou de la tension appliquée d'un moteur entraînant le second élément d'entraînement (20) au courant appliqué ou à la tension appliquée d'un moteur entraînant le premier élément d'entraînement (85), ou
dans laquelle la valeur recommandée est un rapport d'une capacité de transport de matériau de moulage du second élément d'entraînement (20) à une capacité d'alimentation de matériau de moulage du premier élément d'entraînement (85).

2. Machine de moulage à injection (31) selon la revendication 1, dans laquelle
l'appareil de sortie d'information (1) est adapté pour obtenir la valeur recommandée pour le rapport depuis une base de données (16) stockant la valeur recommandée pour le rapport et est adapté pour sortir la valeur recommandée obtenue pour le rapport.

3. Machine de moulage à injection (31) selon la revendication 1, dans laquelle
l'appareil de sortie d'information (1) est adapté pour sortir une plage recommandée pour le rapport outre la valeur recommandée pour le rapport.

4. Machine de moulage à injection (31) selon la revendication 2, dans laquelle
la base de données (16) est adaptée pour stocker la valeur recommandée pour le rapport pour au moins deux différentes combinaisons du premier élément d'entraînement (85) et du second élément d'entraînement (20).

5. Machine de moulage à injection (31) selon la revendication 4, dans laquelle
l'appareil de sortie d'information (12) est adapté pour déterminer la combinaison du premier élément d'entraînement (85) et du second élément d'entraînement (20) utilisés dans la machine de moulage à injection, est adapté pour obtenir la valeur recommandée pour le rapport correspondant à la combinaison du premier élément d'entraînement (85) et du second élément d'entraînement (20) depuis la base de données (20), et est adapté pour sortir la valeur recommandée obtenue pour le rapport.

6. Machine de moulage à injection (31) selon la revendication 1, dans laquelle
l'appareil de sortie d'information (1) est adapté pour sortir la valeur recommandée pour le rapport correspondant à une résine spécifiée sur la base d'informations d'entrée de résine indiquant la résine spécifiée.
